# EUROPÄISCHE PATENTSCHRIFT

(11) **EP 3 548 332 B1**
(45) Veröffentlichungstag und Bekanntmachung des Hinweises auf die Patenterteilung: **15.09.2021**
(21) Anmeldenummer: 17811230.6
(22) Anmeldetag: 23.11.2017
(51) Int. Cl.: B60P 1/64, B60P 3/41, B65D 88/12

(54) **TRANSPORTPLATTFORM**
TRANSPORT PLATFORM
PLATEFORME DE TRANSPORT

(30) Priorität: 30.11.2016 DE 102016014249
(43) Veröffentlichungstag der Anmeldung: 09.10.2019
(73) Patentinhaber: Allog GmbH, 84140 Gangkofen (DE)
(72) Erfinder: GRABMEIER, Stefan, 84140 Gangkofen (DE)
(74) Vertreter: Liebl, Thomas
(86) Internationale Anmeldenummer: PCT/EP2017/080222
(87) Internationale Veröffentlichungsnummer: WO 2018/099800

(56) Entgegenhaltungen:
- WO-A1-2015/081373
- DE-A1- 4 338 158
- DE-A1- 19 849 665
- US-A- 3 768 686
- US-A1- 2012 074 012

## Beschreibung

Die Erfindung betrifft eine Transportplattform zum Verladen, Befördern und Lagern von langgestrecktem, abgelängtem Ladegut, insbesondere Rundholz, nach dem Oberbegriff des Patentanspruches 1.

Rundhölzer bzw. Baumstämme werden beim Transport in gängiger Praxis einzeln zwischen unterschiedlichen Verkehrsträgern verladen. Beispielhaft wird das Rundholz an einem Verladebahnhof zwischen der Bahn und einem LKW-Auflieger einzeln umgeladen, und zwar meist mit einem am LKW angebauten Kran. Der komplette Umladevorgang ist daher mit sehr langen Umschlagzeiten und damit auch mit hohen Personalkosten verbunden. Zudem muss am LKW ein Ladekran angebaut sein, um den Ladevorgang durchzuführen.

Allgemein bekannt ist auch der Einsatz von genormten ISO-Containern aus Stahl, mit deren Hilfe ein einfaches und schnelles Verladen, Befördern, Lagern und Entladen unterschiedlicher Ladegüter ermöglicht ist. Die ISO-Container können beispielhaft als 20-Fuß-Container oder als 40-Fuß-Container bereitgestellt sein. Ein solcher ISO-Container kann vollständig oder teilweise geschlossen ausgeführt sein, und zwar mit Stirn-, Boden-, Deck- und/oder Seitenwänden. Der ISO-Container weist zudem an seinen acht Außenecken ebenfalls normierte ISO-Eckbeschläge (sogenannte Containerecken) auf, mit deren Hilfe der ISO-Container in einfacher und schneller Weise mit zum Beispiel einer Aufliegerkontur eines LKW-Sattelaufliegers oder anderer Verkehrsträger verriegelbar ist sowie der ISO-Container in mehreren Container-Lagen übereinander stapelbar ist.

Aus der DE 198 49 665 A1 ist ein gattungsgemäßer Frachtbehälter bekannt. Aus der DE 43 38 158 A1 ist ein Großraumtransportbehälter bekannt. Aus der US 2012/0074012 A1 ist eine zusammenklappare Transportplattform bekannt. Aus der US 3 768 686 A ist ein weiterer Frachtcontainer bekannt.

Die Aufgabe der Erfindung besteht darin, eine Transportplattform bereitzustellen, die speziell für den Transport von langgestrecktem, abgelängtem Ladegut, insbesondere Rundholz, geeignet ist und mittels der die Umschlagzeiten beim Verladen des Ladeguts zwischen unterschiedlichen Verkehrsträgern reduzierbar ist.

Die Aufgabe ist durch die Merkmale des Patentanspruches 1 gelöst. Bevorzugte Weiterbildungen der Erfindung sind in den abhängigen Ansprüchen offenbart.

Erfindungsgemäß werden die Rundhölzer zum Beispiel am Verladebahnhof nicht mehr einzeln zwischen dem LKW-Auflieger und den Bahn-Aufliegern umgeladen. Anstelle dessen wird eine Transportplattform bereitgestellt, die speziell für ein einfaches und schnelles Verladen, Befördern, Lagern und Entladen solcher Rundhölzer (oder allgemein langgestreckter abgelängter Ladegüter) ausgelegt ist. Die Transportplattform ist als eine offene Trägerkonstruktion mit einer Bodengruppe realisiert, die aus Längs- und Querträgern aufgebaut ist. An jedem der vier Eckbereiche der Bodengruppe ist ein bodenseitiger Eckbeschlag vorgesehen, mit dem die Transportplattform an einer Aufliegerkontur, etwa eines LKW-Sattelaufliegers oder eines anderen Verkehrsträgers, verriegelbar ist. Zudem weist die Bodengruppe an jedem ihrer vier Eckbereiche einen Vertikalträger auf, der mit einem oberseitigen Eckbeschlag abschließt. Auf diese Weise ist gewährleistet, dass die Transportplattform in mehreren Lagen übereinander gestapelt werden kann. Mittels der oberen Eckbeschläge kann eine auf der Transportplattform gestapelte weitere Transportplattform verriegelt werden. Alternativ dazu kann in die oberen Eckbeschläge ein Containerstapler eingreifen, um die Transportplattform zu verladen. Derartige Containerstapler werden in gängiger Praxis beim Verladen von ISO-Containern genutzt und sind zum Beispiel an Verladebahnhöfen im Einsatz.

Auf diese Weise kann die Transportplattform nach Art eines ISO-Containers in einfacher Weise zwischen unterschiedlichen Verkehrsträger, zum Beispiel zwischen der Bahn und einem LKW-Sattelauflieger umgeladen werden, und zwar mittels eines Containerstaplers zum Umladen von ISO-Containern. Die Rundhölzer müssen daher nicht mehr von einem LKW-Kran umgeladen werden, wodurch beim Verladevorgang eine massive Zeitersparnis erzielt wird.

Bevorzugt ist es, wenn die oberen und unteren Eckbeschläge als ISO-Containereckbeschläge ausgeführt sind, wie sie in einem ISO-Container verbaut sind. Die Abstände der oberen und unteren Eckbeschläge können zudem im Wesentlichen identisch zu den Abständen der im ISO-Container verbauten ISO-Containereckbeschläge sein.

In einer technischen Umsetzung kann die Bodengruppe der Transportplattform zwei zueinander parallele seitliche Längsträger aufweisen. Diese können unter Bildung eines geschlossenen Tragrahmens zumindest über stirnseitige Querträger miteinander verbunden sein. Die so gebildete Bodengruppe ist bevorzugt als eine offene Stahl-Trägerkonstruktion gestaltet, das heißt ohne Blech-Beplankung zwischen den Quer- und Längsträgern.

Zur seitlichen Transportsicherung der Rundhölzer ist es bevorzugt, wenn die Bodengruppe beidseitig Rungen aufweisen. Die Rungen sind jeweils an Anbindungspunkten der Bodengruppe, das heißt an den beiden Längsträgern fest oder lösbar angebunden. Bevorzugt ist ein lösbares Stecksystem, bei dem die Runge in eine am Längsträger positionierte Rungentasche lösbar einsteckbar ist. Auf diese Weise kann die Runge zu Reparaturzwecken einfach ausgetauscht werden.

Die Plattform-Stabilität kann gesteigert werden, wenn die Rungen in der Plattform-Querrichtung in Flucht gegenüberliegen. Zudem können die beiden Längsträger an den Rungen-Anbindungspunkten jeweils über Querstreben miteinander verbunden sein. Die Querstreben sowie die Rungen laufen somit an den Rungen-Anbindungspunkten der Längsträger zu einer Knotenstelle zusammen, über die Kräfte in die Trägerkonstruktion eingeleitet werden können.

Um das von der Transportplattform verfügbare Ladevolumen zu vergrößern, ist die Transportplattform in der Plattform-Längsrichtung über die bodenseitigen Eckbeschläge hinaus mit zumindest einem Überstand verlängert. Der Überstand ist bei einer auf einem LKW-Sattelauflieger verladenen Transportplattform an der Sattelauflieger-Heckseite positioniert. Zur Realisierung des heckseitigen Überstands können die beiden seitlichen Längsträger über die bodenseitigen hinteren Eckbeschläge hinaus verlängert sein und mit einem geschlossenen Vertikalrahmen abschließen. Der heckseitige Vertikalrahmen kann aus einer bodenseitigen Querstrebe, die die beiden Längsträger miteinander verbindet, sowie aus Vertikalstreben aufgebaut sein, die jeweils am Längsträger verschweißt sind und oberseitig mit einer oberen Querstrebe verbunden sind. Die obere Querstrebe sowie die Vertikalstreben des Vertikalrahmens laufen an oberen Rahmenecken zusammen. Die beiden oberen Rahmenecken können zur weiteren Steigerung der Plattform-Stabilität über Längsstreben mit den oberen Eckbeschlägen der hinteren Vertikalträger verbunden sein. In Hinblick auf eine Reduzierung des Plattform-Gewichts kann der heckseitige Überstand als eine offene Tragkonstruktion ausgeführt sein, das heißt komplett ohne Blech-Beplankung.

Zusätzlich weist die Transportplattform an der gegenüberliegenden Stirnseite einen weiteren Überstand auf. Dieser ragt in einem, auf dem LKW-Sattelauflieger verladenen Zustand in Richtung des LKW-Führerhauses vor. Der führerhausseitige Überstand ist unter Bildung eines bodenseitigen Freiraums mit einem Höhenversatz von der Plattform-Unterseite abgesetzt. Zudem ist der Überstand derart bemessen, dass daran angrenzende Komponenten des LKW-Führerhauses oder des LKW-Sattelaufliegers, zum Beispiel Hydraulikleitungen oder dergleichen, über einen ausreichend großen Freigang von der Transportplattform beabstandet sind.

Der führerhausseitige Überstand kann in einer bevorzugten Ausführungsform eine kastenförmige Tragkonstruktion aus Quer- und Längsstreben sein, und zwar in Kombination mit einer Blech-Beplankung. Die Blech-Beplankung weist eine dem LKW-Führerhaus zugewandte Stirnwand auf, die über eine Bodenwand mit dem stirnseitigen Querträger der Transportplattform verbunden ist und über Seitenwände mit den Vertikalträgern der Transportplattform verbunden ist.

Sowohl der führerhausseitige Überstand als auch der heckseitige Überstand kann nach oben offen, das heißt ohne Deckwand, ausgeführt sein, um den Ladevorgang nicht zu beinträchtigen.

In einer Weiterbildung kann die Bodengruppe der Transportplattform unterseitig ein Zentrierprofil aufweisen, das beim Verladen der Transportplattform auf einem LKW-Sattelauflieger mit einem korrespondierenden Sattelauflieger-Gegenprofil in Formschluss bringbar ist, um eine lagerichtige Positionierung der Transportplattform auf dem LKW-Sattelauflieger zu gewährleisten.

Das Zentrierprofil kann als ein Zentrierblechteil realisiert sein, das unter Bildung eines nach unten offenen Mitteltunnels eine in der Plattform-Hochrichtung nach oben zurückgesetzte Zentrierfläche aufweist, die in der Plattform-Querrichtung nach außen in Anlaufschrägen übergeht. Die damit korrespondierende Gegenkontur des LKW-Sattelaufliegers kann mittels nach oben abgekröpfter Führungsschienen eines sogenannten Gooseneck-Fahrgestells des Sattelaufliegers realisiert sein, über die das plattformseitige Zentrierblechteil bei lagerichtiger Absenkung der Transportplattform formschlüssig gestülpt wird. Das Zentrierblechteil ist bevorzugt in der Plattform-Längsrichtung vorne am führerhausseitigen Querträger und hinten an einer, die beiden Längsträger verbindenden Querstrebe angebunden.

Zur Verriegelung von Transportplattformen untereinander und/oder mit einem Trägerfahrzeug sind Verschlusselemente (zum Beispiel Twistlocks) bekannt, mit deren Hilfe die Eckbeschläge in formschlüssiger Verbindung mit dem Trägerfahrzeug oder mit einer weiteren Transportplattform bringbar ist.

Die Erfindung und ihre vorteilhaften Aus- und Weiterbildungen sowie deren Vorteile werden nachfolgend anhand von Zeichnungen näher erläutert.

Es zeigen:
- Figur 1: in einer perspektivischen Ansicht die Transportplattform in Alleinstellung;
- Figur 2 bis 6: jeweils Detailansichten der Transportplattform;
- Figur 7: in einer perspektivischen Darstellung die auf einem Sattelauflieger verladene Transportplattform; und
- Figur 8: eine Ansicht, in der ein Ladevorgang veranschaulicht ist, bei dem die Transportform auf einen Sattelauflieger verladen wird.

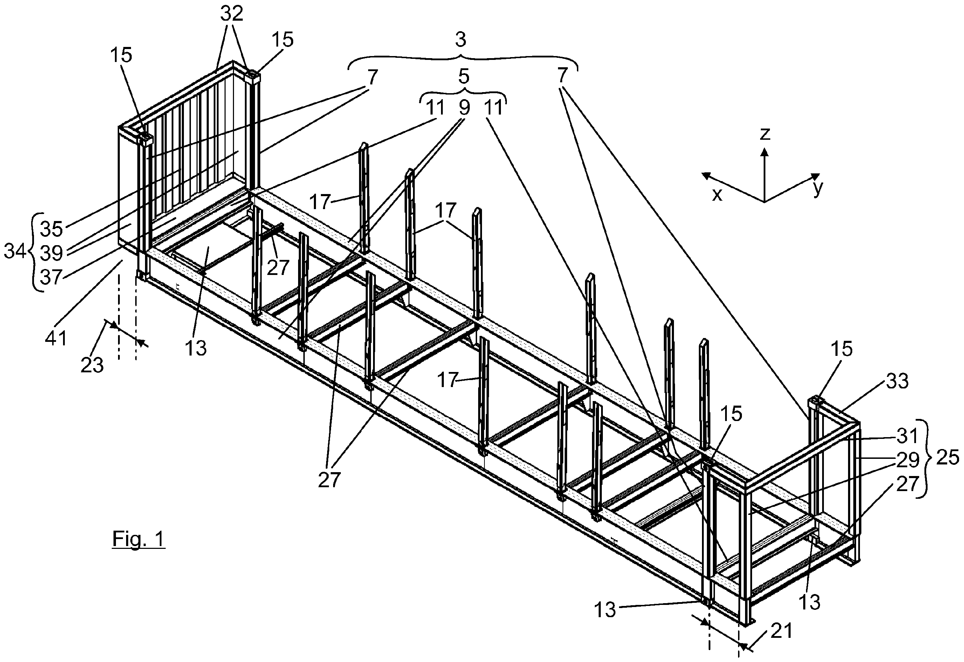

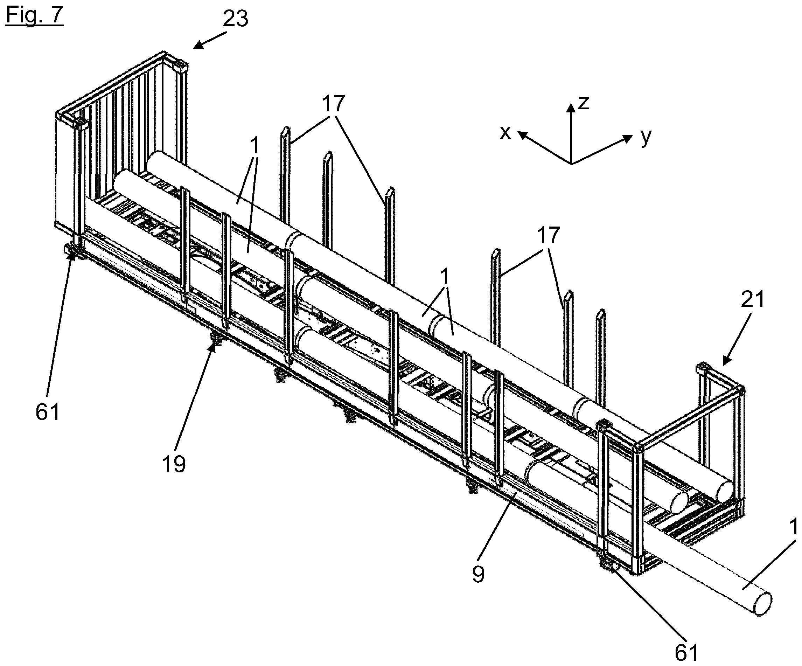

Anhand der Figur 1 wird nachfolgend der Aufbau einer Transportplattform beschrieben, die speziell zum Verladen von Rundhölzen 1 (Figur 7) ausgelegt ist. Die Transportplattform ist weitgehend ohne großflächig geschlossene Blech-Beplankung als eine offene Trägerkonstruktion 3 realisiert, die eine Bodengruppe 5 sowie Vertikalträger 7 aufweist. Die Bodengruppe 5 weist in der Figur 1 zwei zueinander parallele seitliche Längsträgern 9 auf, die sich in der Plattform-Längsrichtung x erstrecken und zusammen mit stirnseitigen Querträgern 11 einen geschlossenen Tragrahmen bilden. Die Längs- und Querträger 9, 11 sind in den Figuren exemplarisch als I-Stahlprofilteile ausgeführt, jedoch nicht auf ein solches I-Profil beschränkt.

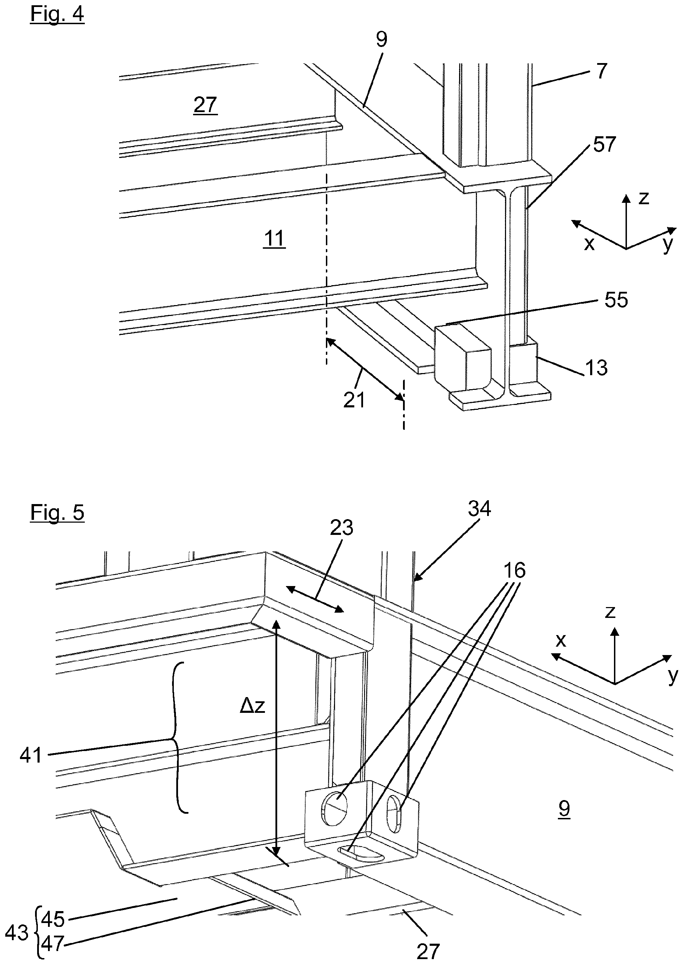

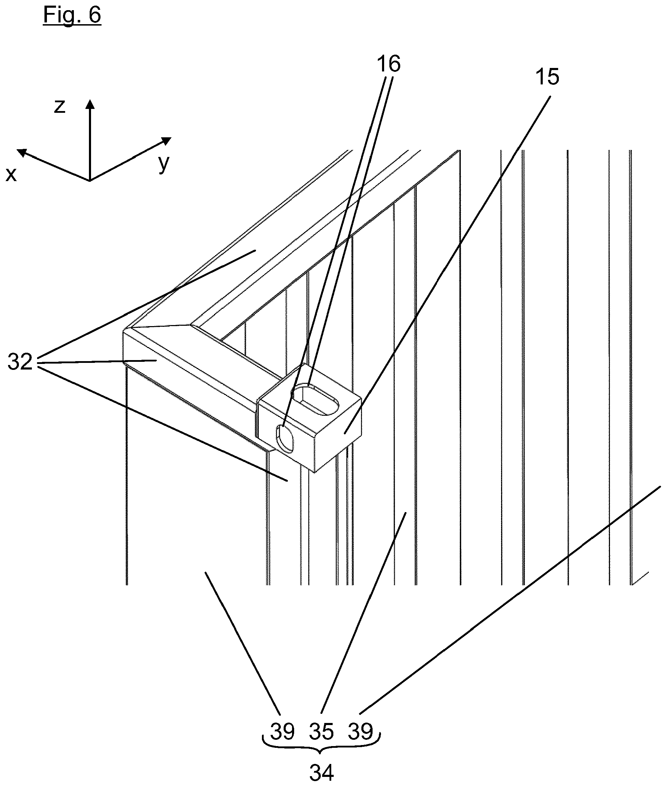

An jedem der vier Eckbereiche der Bodengruppe 5 sind jeweils bodenseitige Eckbeschläge 13 verschweißt. Zudem weist jeder der vier Eckbereiche der Bodengruppe 5 die bereits erwähnten Vertikalträger 7 auf, die in der Plattform-Hochrichtung z nach oben abragen und oberseitig mit oberen Eckbeschlägen 15 abschließen. Die oberen und unteren Eckbeschläge 13, 15 sind als genormte ISO-Containereckbeschläge ausgeführt, und zwar mit Befestigungsaugen 16 (Figur 5 oder 6), in die später beschriebene Verschlusselemente 61 eingreifen können. Ebenso sind die Abstände der oberen und unteren Eckbeschläge 13, 15 im Wesentlichen identisch zu den genormten Abständen von ISO-Containereckbeschlägen in einem ISO-Container. Im vorliegenden Ausführungsbeispiel sind die Abstände der oberen und unteren Eckbeschläge 13, 15 in der Plattform-Längsrichtung x und in der Plattform-Längsrichtung y sowie in der Plattform-Hochrichtung z jeweils den korrespondierenden Abständen von Container-Eckbeschlägen in einem 40-Fuß-ISO-Container nachgebildet.

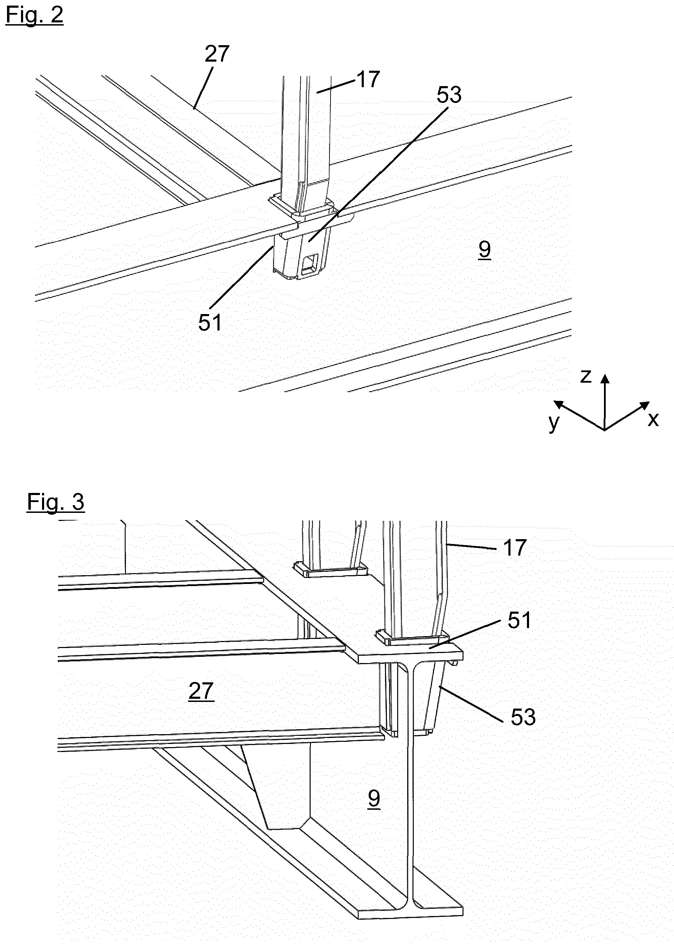

Um eine seitliche Transportsicherung der Rundhölzer 1 zu gewährleisten, sind an den beiden seitlichen Längsträgern 9 jeweils Rungen 17 befestigt, deren Anbindung an den Längsträgern 9 später anhand der Figur 2 und 3 erläutert ist.

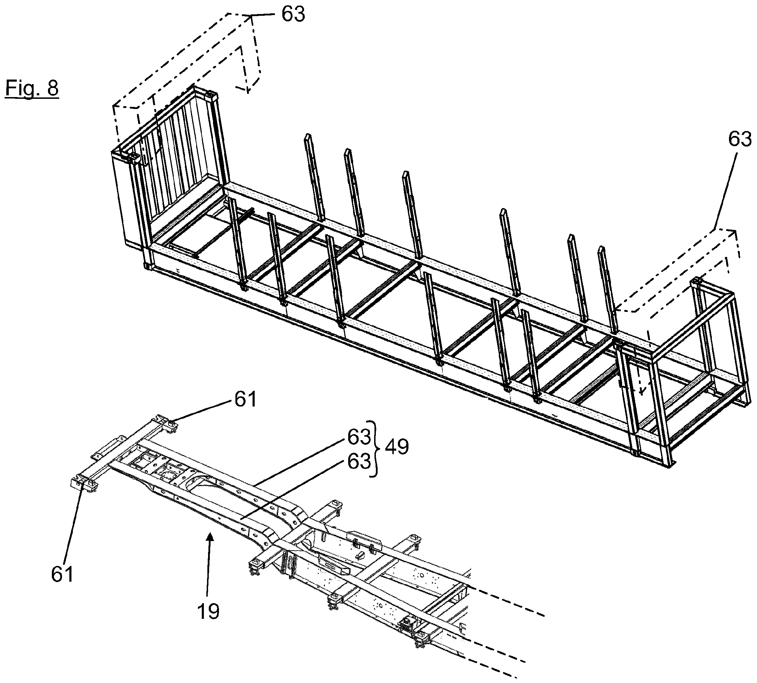

Die Trägerkonstruktion 3 der Transportplattform ist speziell für die Verladung auf einen LKW-Sattelauflieger 19 ausgelegt, dessen Fahrgestell in der Figur 8 teilweise angedeutet ist. Im verladenen Zustand ist die in der Figur 1 linke Seite der Transportplattform dem LKW-Führerhaus zugewandt und die rechte Seite der Transportplattform an der Sattelauflieger-Heckseite positioniert. Wie aus der Figur 1 weiter hervorgeht, ist die Transportplattform in der Plattform-Längsrichtung x betrachtet stirnseitig über die bodenseitigen Eckbeschläge 13 hinaus mit einem heckseitigen Überstand 21 und mit einem führerhausseitigen Überstand 23 verlängert. Die beide Überstände 21, 23 sind oberseitig offen, um den Ladevorgang von oben nicht zu beeinträchtigen.

Zur Realisierung des heckseitigen Überstands 21 erstrecken sich die beiden seitlichen Längsträger 9 durchgängig über die bodenseitigen Eckbeschläge 13 hinweg und schließen diese an einem geschlossenen Vertikalrahmen 25 ab. Der umfangsseitig geschlossene Vertikalrahmen 25 ist aus einer bodenseitigen Querstrebe 27 aufgebaut, die zwischen den beiden Längsträgern 9 verläuft, sowie aus Vertikalstreben 29 aufgebaut, die an oberen Rahmenecken mit einer oberen Querstrebe 31 zusammenlaufen. Die beiden oberen Rahmenecken des Vertikalrahmens 25 sind über Längsstreben 33 mit den oberen Eckbeschlägen 15 der Vertikalträger 7 verbunden, um die Plattform-Stabilität speziell im Heckbereich zu erhöhen. Die heckseitigen Vertikalträger 7 bilden daher zusammen mit dem heckseitigen geschlossenen Vertikalrahmen 25 eine stabile offene Tragkonstruktion, mittels der die Heckseite der Transportplattform gewichtsgünstig ausgesteift ist.

Der nach vorne abragende führerhausseitige Überstand 23 ist im Gegensatz zu der offenen Tragkonstruktion des heckseitigen Überstands 21 kastenförmig geschlossen mit einer Blech-Beplankung 34 ausgebildet, die mit Vertikal-, Längs- und Querstreben 32 begrenzt ist (Figur 1 oder 6). Die Blech-Beplankung 34 weist eine dem LKW-Führerhaus zugewandten Stirnseite 35 auf, die über eine Bodenwand 37 mit dem vorderen stirnseitigen Querträger 11 verbunden ist und über Seitenwände 39 mit den vorderen Vertikalträgern 7 der Transportplattform verbunden ist.

Der führerhausseitige Überstand 23 ist derart konstruiert, dass für die angrenzenden Komponenten des LKW-Führerhauses und des LKW-Sattelaufliegers 19 ein ausreichender Freigang zum Beispiel bei einem Lenkvorgang vorhanden ist. Demgemäß ist die Bodenwand 37 des führerhausseitigen Überstands 23 unter Bildung eines bodenseitigen Freiraums 41 mit einem Höhenversatz Δz (Figur 5) von der Plattform-Unterseite abgesetzt. Bei einer Positionierung der Transportplattform auf dem LKW-Sattelauflieger 19 sind im Bereich des bodenseitigen Freiraums 41 Sattelauflieger-Komponenten, etwa Hydraulikleitungen oder dergleichen, angeordnet.

Wie aus der Figur 1 weiter hervorgeht, weist die Transportplattform an ihrer vorderen Unterseite ein Zentrierblechteil 43 auf, das unter Bildung eines nach unten offenen Mitteltunnels mit einem in der Plattform-Hochrichtung z nach oben zurückgesetzten Zentrierfläche 45 (Figur 5) ausgebildet ist, die in der Plattform-Querrichtung y nach außen in seitliche Anlaufschrägen 47 (Figur 5) übergehen. Das Zentrierblechteil 43 ist in der Plattform-Längsrichtung x vorne am vorderen Querträger 11 verschweißt sowie hinten an einer bodenseitigen Querstrebe 27 verschweißt. Das Zentrierblechteil 43 wirkt mit einem korrespondierenden Gegenprofil 49 (Figur 8) am LKW-Sattelauflieger 19 zusammen, um eine lagerichtige Positionierung der Transportplattform auf dem LKW-Sattelauflieger 19 zu gewährleisten. Das Gegenprofil 49 des LKW-Sattelaufliegers 19 ist in der Figur 8 aus zwei nach oben gekröpfte Auflieger-Längsträger 63 ausgebildet.

In der Figur 2 und 3 ist in Detailansichten jeweils das Stecksystem gezeigt, mit dem die Rungen 17 lösbar an den Längsträgern 9 gehaltert sind. Das Stecksystem weist eine Rungentasche 53 auf, die in einer Materialaussparung 51 des Längsträgers eingesetzt und damit verschweißt ist. Die Runge 17 ist mit ihrem unteren keilförmigen Ende formschlüssig in der ebenfalls keilförmig ausgebildeten Rungentasche 53 einsteckbar. Gegebenenfalls kann die Runge 17 über nicht dargestellte Sicherungsmittel in der Rungentasche 53 gesichert sein.

Zur Steigerung der Plattform-Stabilität sind jeweils in einer Querebene yz zwei seitlich gegenüberliegende Rungen 17 in der Plattform-Querrichtung y in Flucht angeordnet. Zudem verläuft in jeder Querebene yz eine Querstrebe 27, die jeweils an den Rungen-Anbindungspunkten der seitlichen Längsträgern 9 angebunden ist.

In der Figur 4 ist in einer weiteren Detailansicht der heckseitige Überstand 21 teilweise gezeigt. Demzufolge erstreckt sich der Längsträger 9 durchgängig über den bodenseitigen Eckbeschlag 13 hinaus bis zum heckseitigen Vertikalrahmen 25. An der gezeigten unteren Rahmenecke des Vertikalrahmens 25 laufen die bodenseitige Querstrebe 27 und die Vertikalstrebe 29 unter Bildung einer unteren Rahmenecke am Längsträger 9 zusammen.

Wie aus der Figur 4 weiter hervorgeht, ist der quaderförmige untere Eckbeschlag 13 in einen weiteren Materialausschnitt 55 des Längsträgers 9 und des Querträgers 11 verschweißt. Der untere Eckbeschlag 13 ist in der Plattform-Hochrichtung z betrachtet in Flucht mit dem heckseitigen Vertikalträger 7 angeordnet. Zur Eckversteifung ist in der Figur 4 zwischen dem bodenseitigen Eckbeschlag 13 und dem oberen T-Flansch des Längsträgers 9 ein U-profilförmiges Verstärkungsblechteil 57 abgestützt. Entsprechende Verstärkungsblechteile 57 sind auch an den weiteren bodenseitigen Eckbeschlägen 13 verbaut.

In der Figur 7 ist eine teilweise mit Rundhölzern 1 bestückte Transportplattform gezeigt, die auf dem Sattelauflieger 19 verladen ist. Von dem Sattelauflieger 19 ist in den Figuren 7 und 8 lediglich dessen Fahrgestell gezeigt. Zur Sicherung der Transportplattform sind fahrgestellseitigen Verriegelungselemente 61, zum Beispiel Twistlocks, in Eingriff mit den unteren ISO-Eckbeschlägen 13 der Transportplattform und mit diesen verriegelt. Zur Transportsicherung der Rundhölzer 1 können in gängiger Praxis nicht dargestellte Spanngurte verwendet werden, um die Rundhölzer 1 auf der Transportplattform festzuspannen. Die hierzu erforderlichen Spanngurtaufroller können in einer ersten Ausführungsvariante lose bereitgestellt werden oder in einer bevorzugten zweiten Ausführungsvariante als festmontierte Anbauteile lagesicher an der Transportplattform befestigt sein.

In der Figur 8 ist ein Verladevorgang der leeren Transportplattform veranschaulicht. Demzufolge wird die Transportplattform mittels eines nur grob angedeuteten Greifers 63 eines Containerstaplers auf das Fahrgestell des LKW-Sattelaufliegers 19 abgesenkt. Der Greifer 63 ist in Eingriff mit den vier oberen ISO-Eckbeschlägen 15 der Transportplattform und mit diesen durch Betätigung von Verschlusselementen (zum Beispiel Twistlocks) verriegelt. Beim Absenkvorgang wird die Transportplattform mittels des Containerstaplers lagerichtig auf das Fahrgestell des Sattelaufliegers 19 aufgesetzt, wodurch die fahrgestellseitigen Verriegelungselemente 61 in Eingriff mit den unteren ISO-Eckbeschlägen 13 der Transportplattform kommen und mit diesen verriegelt werden. Das in der Figur 8 gezeigte Sattelauflieger-Fahrgestell ist von einer sogenannten Schwanenhals-Bauart, bei der die Auflieger-Längsträger 63 um einen Höhenversatz z nach oben gekröpft sind und das Gegenprofil 49 bilden, mit dem Zentrierblechteil 43 der Transportplattform zusammenwirkt.

### Bezugszeichenliste

- 1: Rundhölzer
- 3: Trägerkonstruktion
- 5: Bodengruppe
- 7: Vertikalträger
- 9: Längsträger
- 11: Querträger
- 13: untere Eckbeschläge
- 15: obere Eckbeschläge
- 16: Befestigungsaugen
- 17: Rungen
- 19: Sattelauflieger
- 21: heckseitiger Überstand
- 23: führerhausseitiger Überstand
- 25: Vertikalrahmen
- 27: bodenseitige Querstrebe
- 29: Vertikalstrebe
- 31: obere Querstrebe
- 32: Längs-, Quer- und Vertikalstreben
- 33: Längsstrebe
- 34: Blech-Beplankung
- 35: Stirnwand
- 37: Bodenwand
- 39: Seitenwände
- 41: Freiraum
- 43: Zentrierblechteil
- 45: Zentrierfläche
- 47: Anlaufschrägen
- 49: Gegenprofil
- 51: Material-Ausnehmung
- 53: Rungentasche
- 55: Material-Ausnehmung
- 57: Verstärkungsblechteil
- 61: Verschlusselemente
- 63: Sattelauflieger-Längsträger
- 65: Containerstapler-Greifer

## Patentansprüche

1. Transportplattform zum Verladen, Befördern und Lagern von langgestrecktem, abgelängtem Ladegut, insbesondere Rundholz, die als eine Trägerkonstruktion (3) mit einer Bodengruppe (5) realisiert ist, die aus Längs- und Querträgern (9, 11) aufgebaut ist, wobei an jedem der vier Eckbereiche der Bodengruppe (5) ein bodenseitiger Eckbeschlag (13) vorgesehen ist, mit dem die Transportplattform an einer Aufliegerkontur eines LKW-Sattelaufliegers (19) oder eines anderen Verkehrsträgers verriegelbar ist und wobei die Bodengruppe (5) an jedem der vier Eckbereiche einen Vertikalträger (7) aufweist, der mit einem oberseitigen Eckbeschlag (15) abschließt, mit dem eine darauf gestapelte weitere Transportplattform verriegelbar ist oder in die ein Containerstapler zum Verladen der Transportplattform eingreift, **dadurch gekennzeichnet, dass** die Transportplattform in der Plattform-Längsrichtung (x) über die bodenseitigen Eckbeschläge (13) hinaus mit zumindest einem heckseitigen Überstand (21) verlängert ist, dass der heckseitige Überstand (21) bei einer auf dem LKW-Sattelauflieger (19) verladenen Transportplattform an der Sattelauflieger-Heckseite angeordnet ist, dass die Transportplattform einen führerhausseitigen Überstand (23) aufweist, der in einem auf den LKW-Sattelauflieger (19) verladenen Zustand in Richtung eines LKW-Führerhaus vorragt, und dass der führerhausseitige Überstand (23) unter Bildung eines bodenseitigen Freiraums (41) um einem Höhenversatz (Δz) von der Plattform-Unterseite abgesetzt ist, so dass bei einer Positionierung der Transportplattform auf dem LKW-Sattelauflieger (19) im Bereich des bodenseitigen Freiraums (41) Sattelauflieger-Komponenten angeordnet sind.

2. Transportplattform nach Anspruch 1, **dadurch gekennzeichnet, dass** die oberen und unteren Eckbeschläge (13, 15) als ISO-Containereckbeschläge ausgeführt sind, und dass die Abstände der oberen und unteren Eckbeschläge (13, 15) identisch zu den Abständen der ISO-Containereckbeschläge eines ISO-Containers ausgeführt sind.

3. Transportplattform nach Anspruch 1 oder 2, **dadurch gekennzeichnet, dass** die Bodengruppe (5) zwei zueinander parallele seitliche Längsträger (9) aufweist, die unter Bildung eines geschlossenen Tragrahmens zumindest über stirnseitige Querträger (11) miteinander verbunden sind.

4. Transportplattform nach Anspruch 1, 2 oder 3, **dadurch gekennzeichnet, dass** die Bodengruppe (5) zur Transportsicherung des Ladeguts (1) beidseitig Rungen (17) aufweist, und dass die Rungen (17) an Anbindungspunkten der Bodengruppe (5) fest oder lösbar angebunden ist.

5. Transportplattform nach Anspruch 4, **dadurch gekennzeichnet, dass** die Rungen (17) in der Plattform-Querrichtung (y) in Flucht gegenüberliegen, und dass die beiden Längsträger (9) an den Anbindungspunkten gegenüberliegender Rungen (17) über Querstreben (27) miteinander verbunden sind.

6. Transportplattform nach einem der vorhergehenden Ansprüche, **dadurch gekennzeichnet, dass** zur Realisierung des Überstands (21) die beiden seitlichen Längsträger (9) über die bodenseitigen Eckbeschläge (13) hinaus verlängert sind und an einem geschlossenen Vertikalrahmen (25) abschließen, und dass der Vertikalrahmen (25) aus einer bodenseitigen Querstrebe (27), einer oberen Querstrebe (31) sowie aus Vertikalstreben (29) aufgebaut ist, die an oberen Rahmenecken zusammenlaufen, und dass die beiden oberen Rahmenecken über Längsstreben (33) mit den oberen Eckbeschlägen (15) der Vertikalträger (7) verbunden sind.

7. Transportplattform nach einem der vorhergehenden Ansprüche, **dadurch gekennzeichnet, dass** der führerhausseitige Überstand (23) kastenförmig geschlossen ist, und zwar mit einer Blech-Beplankung (34), die eine dem Führerhaus zugewandte Stirnwand (35) aufweist, die über eine Bodenwand (37) mit dem stirnseitigen Querträger (11) verbunden ist und über Seitenwände (39) mit den Vertikalträgern (7) verbunden ist.

8. Transportplattform nach einem der vorhergehenden Ansprüche, **dadurch gekennzeichnet, dass** die Bodengruppe (5) unterseitig ein Zentrierprofil (43) aufweist, das beim Verladen der Transportplattform auf einem LKW-Sattelauflieger (19) mit einem korrespondierenden Gegenprofil (49) in Formschluss bringbar ist, um eine lagerichtige Positionierung der Transportplattform auf dem LKW-Sattelauflieger (19) zu gewährleisten.

9. Transportplattform nach Anspruch 8, **dadurch gekennzeichnet, dass** das Zentrierprofil (43) als ein Zentrierblechteil realisiert ist, das eine in der Plattform-Hochrichtung (z) nach oben zurückgesetzte Profilfläche (45) aufweist, die in der Plattform-Querrichtung (y) nach außen in Anlaufschrägen (47) übergeht.

10. Transportplattform nach Anspruch 9, **dadurch gekennzeichnet, dass** das Zentrierblechteil (43) in der Plattform-Längsrichtung (x) an dem führerhausseitigen Querträger (11) und einer, die beiden Längsträger (9) verbindenden Querstrebe (27) angebunden ist.

## Claims

1. Transport platform for loading, conveying and storing elongate cut-to-length loads, in particular timber logs, said transport platform being implemented as a beam construction (3) having a base assembly (5) which is constructed from longitudinal beams (9) and cross beams (11), wherein a base-proximal corner casting (13) by way of which the transport platform is able to be locked to a semitrailer contour of a truck semitrailer (19) or any other mode of transport is provided at each of the four corner regions of the base assembly (5), and wherein the base assembly (5) at each of the four corner regions has a vertical beam (7) which terminates by way of a corner casting (15) on the upper side to which a further transport platform stacked thereon is able to be locked, or in which a container stacker engages for loading the transport platform, **characterized in that** the transport platform in the platform longitudinal direction (x) by way of at least one rearward protrusion (21) is extended beyond the base-proximal corner castings (13); **in that** the rearward protrusion (21) in the case of a transport platform loaded on the truck semitrailer (19) is disposed on the rear side of the semitrailer; **in that** the transport platform has a cab-proximal protrusion (23) which in a state loaded on the truck semitrailer (19) protrudes in the direction of a truck cab; and **in that** the cab-proximal protrusion (23), while forming a base-proximal void (41), is offset from the platform lower side by a height offset (Δz) such that, when positioning the transport platform on the truck semitrailer (19), semitrailer components are disposed in the region of the base-proximal void (41).

2. Transport platform according to Claim 1, **characterized in that** the upper corner castings (13) and lower corner castings (15) are embodied as ISO container corner castings, and **in that** the spacings of the upper corner castings (13) and lower corner castings (15) are embodied so as to be identical to the ISO corner castings of an ISO container.

3. Transport platform according to Claim 1 or 2, **characterized in that** the base assembly (5) has two mutually parallel lateral longitudinal beams (9) which, while forming a closed support frame, are connected to one another at least by cross beams (11) on the end sides.

4. Transport platform according to Claim 1, 2, or 3, **characterized in that** the base assembly (5) for securing the load (1) during transport has stanchions (17) on both sides, and **in that** the stanchions (17) are fixedly or releasably attached to attachment points of the base assembly (5).

5. Transport platform according to Claim 4, **characterized in that** the stanchions (17) in the platform transverse direction (y) lie opposite one another in mutual alignment, and **in that** the two longitudinal beams (9) are connected to one another by cross braces at the attachment points of mutually opposite stanchions (17).

6. Transport platform according to one of the preceding claims, **characterized in that,** for implementing the protrusion (21), the two lateral longitudinal beams (9) are extended beyond the base-proximal corner castings (13) and terminate at a closed vertical frame (25), and **in that** the vertical frame (25) is constructed from a base-proximal cross brace (27), an upper cross brace (31) as well as from vertical braces (29) which converge at upper frame corners, and **in that** the two upper frame corners by way of longitudinal braces (33) are connected to the upper corner castings (15) of the vertical beams (7).

7. Transport platform according to one of the preceding claims, **characterized in that** the cab-proximal protrusion (23) is closed in the manner of a box, specifically by sheet metal panelwork (34) which has an end wall (35) which faces the cab and by way of a base wall (37) is connected to the cross beams (11) on te end sides, and by way of lateral walls (39) is connected to the vertical beams (7).

8. Transport platform according to one of the preceding claims, **characterized in that** the base assembly (5) on the lower side has a centring profile (43) which when loading the transport platform onto a truck semitrailer (19) can be brought to connect in a form-fitting manner to a corresponding mating profile (49) so as to guarantee positioning of the transport platform in the correct orientation on the truck semitrailer (19).

9. Transport platform according to Claim 8, **characterized in that** the centring profile (43) is implemented as a sheet metal centring part which in the platform height direction (z) has an upwardly recessed profiled face (45) which in the platform transverse direction (y) transitions toward the outside into ramps (47).

10. Transport platform according to Claim 9, **characterized in that** the sheet metal centring part (43) in the platform longitudinal direction (x) is attached to the cab-proximal cross beam (11) and to a cross brace (27) that connects the two longitudinal beams (9).

## Revendications

1. Plate-forme de transport destinée au chargement, au transport et au stockage d'un fret de forme allongé qui a été tronçonné, en particulier du bois rond, laquelle plateforme est réalisée sous la forme d'une structure de support (3) pourvue d'un ensemble formant fond (5) qui comprend des poutres longitudinales et transversales (9, 11), une ferrure de coin côté fond (13) étant prévue au niveau de chacune des quatre zones de coin de l'ensemble formant fond (5) et permettant de verrouiller la plate-forme de transport sur un contour de remorque d'un camion semi-remorque (19) ou d'un autre mode de transport et l'ensemble formant fond (5) comportant au niveau de chacune des quatre zones de coin un support vertical (7) qui se termine par une ferrure de coin côté supérieur (15) qui permet de verrouiller une autre plate-forme de transport empilée dessus ou permettant l'engagement d'un chariot élévateur de conteneurs destiné à charger la plate-forme de transport, **caractérisée en ce que** la plate-forme de transport est prolongée dans la direction longitudinale (x) de la plate-forme au-delà des ferrures de coin côté fond (13) avec au moins une projection arrière (21), **en ce que** la projection arrière (21) est disposée à l'arrière de la semi-remorque dans le cas d'une plate-forme de transport chargée sur le camion semi-remorque (19), **en ce que** la plate-forme de transport comporte une projection côté cabine de conducteur (23) qui fait saillie en direction d'une cabine de conducteur de camion lorsque ladite plateforme est chargée sur la semi-remorque de camion (19), et **en ce que** la projection côté cabine de conducteur (23) est décalée du côté inférieur de la plate-forme d'un décalage en hauteur (Δz) en ménageant un espace libre côté fond (41) de sorte que, lorsque la plate-forme de transport est positionnée sur le camion semi-remorque (19), des composants de semi-remorque sont disposés au niveau de l'espace libre côté fond (41).

2. Plate-forme de transport selon la revendication 1, **caractérisée en ce que** les ferrures de coin supérieure et inférieure (13, 15) sont conçues comme des ferrures de coin de conteneur ISO, et **en ce que** les distances entre les ferrures de coin supérieure et inférieure (13, 15) sont identiques aux distances entre les ferrures de coin de conteneur ISO d'un conteneur ISO.

3. Plate-forme de transport selon la revendication 1 ou 2, **caractérisée en ce que** l'ensemble formant fond (5) comporte deux poutres longitudinales latérales (9) parallèles entre elles qui sont reliées entre elles au moins par le biais de poutres transversales latérales côté frontal (11) pour former un cadre de support fermé.

4. Plate-forme de transport selon la revendication 1, 2 ou 3, **caractérisée en ce que** l'ensemble formant fond (5) comporte des deux côtés des ridelles (17) pour sécuriser le fret (1) pendant le transport, et **en ce que** les ridelles (17) sont reliées de manière fixe ou amovible aux points de liaison de l'ensemble formant fond (5).

5. Plate-forme de transport selon la revendication 4, **caractérisée en ce que** les ridelles (17) sont opposées de manière alignée dans la direction transversale (y) de la plateforme et **en ce que** les deux poutres longitudinales (9) sont reliées entre elles aux points de liaison de ridelles opposés (17) par le biais de traverses (27).

6. Plate-forme de transport selon l'une des revendications précédentes, **caractérisée en ce que**, pour réaliser la projection (21), les deux poutres longitudinales latérales (9) se prolongent au-delà des ferrures de coin côté fond (13) et se terminent au niveau d'un cadre vertical fermé (25), et **en ce que** le cadre vertical (25) comprend une traverse côté fond (27), une traverse supérieure (31) et des montants verticaux (29) qui convergent au niveau de coins de cadre supérieurs, et **en ce que** les deux coins de cadre supérieurs sont reliés aux ferrures de coin supérieures (15) des supports verticaux (7) par le biais de barres longitudinales (33).

7. Plate-forme de transport selon l'une des revendications précédentes, **caractérisée en ce que** la projection côté cabine de conducteur (23) est fermée en forme de caisson, c'est-à-dire avec un bordé en tôle (34) qui comporte une paroi frontale (35) dirigée vers la cabine de conducteur et qui est reliée à la traverse côté frontal (11) par le biais d'une paroi de fond (37) et qui est reliée aux supports verticaux (7) par le biais de parois latérales (39).

8. Plate-forme de transport selon l'une des revendications précédentes, **caractérisée en ce que** l'ensemble formant fond (5) comporte du côté inférieur un profilé de centrage (43) qui peut être amené en engagement par complémentarité de formes avec un profilé homologue correspondant (49) lors du chargement de la plate-forme de transport sur un camion semi-remorque (19) afin de garantir que la plate-forme de transport est correctement positionnée sur le camion semi-remorque (19).

9. Plate-forme de transport selon la revendication 8, **caractérisée en ce que** le profilé de centrage (43) est réalisé sous la forme d'une pièce de centrage en tôle qui comporte une surface profilée (45) qui est en retrait vers le haut dans la direction verticale (z) de la plate-forme et qui dans la direction transversale (y) de la plate-forme se transforme vers l'extérieur en biseaux de butée (47).

10. Plate-forme de transport selon la revendication 9, **caractérisée en ce que** la pièce de centrage en tôle (43) est reliée dans la direction longitudinale (x) de la plate-forme à la poutre transversale côté cabine de conducteur (11) et à une traverse (27) reliant les deux poutres longitudinales (9).
